# EUROPÄISCHE PATENTSCHRIFT

(11) **EP 1 800 588 B1**
(45) Veröffentlichungstag und Bekanntmachung des Hinweises auf die Patenterteilung: **24.02.2010**
(21) Anmeldenummer: 05027937.1
(22) Anmeldetag: 20.12.2005
(51) Int. Cl.: A47L 9/28, H01M 8/10

(54) **Selbstfahrende Saugreinigungsvorrichtung**
Self-propelled vacuum cleaning apparatus
Nettoyeuse aspirante automotrice

(43) Veröffentlichungstag der Anmeldung: 27.06.2007
(73) Patentinhaber: Wessel-Werk GmbH, 51580 Reichshof-Wildbergerhütte (DE)
(72) Erfinder: Dilger, Horst, 51597 Morsbach (DE); Kaffenberger, Dieter, 51674 Wiehl (DE); Riehl, Klaus-Dieter, 57489 Drolshagen (DE)
(74) Vertreter: Albrecht, Rainer Harald

(56) Entgegenhaltungen:
- EP-A- 0 803 224
- EP-A- 1 547 512
- WO-A-01/06905
- GB-A- 2 344 748
- US-A- 5 787 545
- US-A1- 2004 195 012
- US-A1- 2004 262 060
- PATENT ABSTRACTS OF JAPAN Bd. 015, Nr. 092 (C-0811), 6. März 1991 (1991-03-06) & JP 02 307420 A (MATSUSHITA ELECTRIC IND CO LTD), 20. Dezember 1990 (1990-12-20)

## Beschreibung

Die Erfindung betrifft eine selbstfahrende Saugreinigungsvorrichtung für die Reinigung von glatten und textilen Bodenbelägen, insbesondere im privaten Wohnbereich, mit einem Gehäuse, einem Sauggebläse, einer elektrisch angetriebenen Reinigungswalze, einem elektrischen Fahrantrieb, einer Steuerelektronik und einer Stromquelle.

Selbstfahrende Saugreinigungsvorrichtungen sind aus den Druckschriften US 5 787 545 und EP 0 803 224 B1 und in verschiedenen Ausführungen aus der Praxis bekannt. Die bekannten Ausführungen weisen einen Akkumulator als Stromquelle auf, der manuell oder automatisch während der Betriebspausen in einer Ladestation aufgeladen wird. Die selbstfahrenden Saugreinigungsvorrichtungen werden beim Reinigungsbetrieb von der Steuerelektronik, die auf den elektrischen Fahrantrieb wirkt, gesteuert. Zur Erkennung von Hindernissen und von Wänden können verschiedene Berührungssensoren oder berührungslos arbeitende Sensoren vorgesehen sein. Es ist auch bekannt, den zurückgelegten Weg in Form einer elektronischen Karte in der Steuerelektronik abzuspeichern, wodurch eine flächendeckende Reinigung in einer möglichst kurzen Zeit erreicht werden kann. Bei einem typischen Leistungsbedarf von bis zu 40 Watt beträgt die Arbeitszeit bis zur Entladung der Akkumulatoren etwa eine Stunde. Gemäß der US 5 787 545 soll das beschriebene Saugreinigungswerkzeug geringe Abmessungen und eine geringe maximale elektrische Leistung von höchstens 100 Watt aufweisen, wobei auf das Sauggebläse höchstens 5 bis 10 Watt und auf Motoren des Fahrantriebs typischerweise 2 bis 3 Watt entfallen. Die bekannten Saugreinigungswerkzeuge sind geeignet, um grobe, lose Partikel wie Krümel und Fusseln von glatten Bodenbelägen zu entfernen. Die Reinigungswirkung von textilen Bodenbelägen ist dagegen unzureichend.

Vor diesem Hintergrund liegt der Erfindung die Aufgabe zugrunde, eine selbstfahrende Saugreinigungsvorrichtung anzugeben, weiches sowohi auf glatten als auch auf textilen Bodenbelägen ein akzeptables Reinigungsvermögen aufweist.

Die Aufgabe wird erfindungsgemäß dadurch gelöst, dass die maximale elektrische Leistung des selbstfahrenden Saugreinigungswerkzeuges beim Reinigungsbetrieb zwischen 150 Watt und 300 Watt liegt, wobei auf das Sauggebläse zwischen 120 Watt und 220 Watt, auf den elektrischen Walzenantrieb für die Reinigungswalze zwischen 10 Watt und 40 Watt und auf den Fahrbetrieb zwischen 5 Watt und 40 Watt entfallen und wobei die Steuerelektronik einen Leistungsbedarf von weniger als 5% der maximalen elektrischen Leistung aufweist. Die maximale elektrische Leistung der selbstfahrenden Saugreinigungsvorrichtung bezieht sich auf die Summe der maximalen elektrischen Leistungen der einzelnen Komponenten. Erfindungsgemäß können in dem angegebenen Bereich der maximalen elektrischen Leistung relativ ausgeglichene Saugeigenschaften auf glatten Böden und textilen Bodenbelägen erreicht werden, wobei die benötigte Kapazität der Stromquelle nicht unverhältnismäßig groß ist. Bei einer niedrigeren maximalen elektrischen Leistung des selbstfahrenden Saugreinigungswerkzeuges müssten die Komponenten schwächer ausgelegt werden und wäre eine effektive Reinigung von textilen Bodenbelägen unabhängig davon, wie die Leistung auf die einzelnen Komponenten verteilt würde, nicht möglich. Bei einer Erhöhung der maximalen elektrischen Leistung über den angegebenen Bereich hinaus würden Stromquellen benötigt, die vergleichsweise schwer und aus diesem Grund nachteilig sind. Oberhalb der angegebenen maximal elektrischen Leistung ist auch festzustellen, dass selbst bei einer optimalen Leistungsverteilung die Reinigungsleistung nicht proportional mit der elektrischen Leistung ansteigt und dass so für eine Erhöhung der Reinigungsleistung ein unverhältnismäßig großer Mehraufwand an elektrischer Leistung notwendig ist. Erfindungswesentlich ist auch die Aufteilung der elektrischen Leistung auf die Komponenten der selbstfahrenden Saugreinigungsvorrichtung, wobei der Großteil der elektrischen Leistung erfindungsgemäß für das Sauggebläse vorgesehen ist.

Die Steuerelektronik weist typischerweise verschiedene Kontaktsensoren oder berührungslos arbeitende Sensoren und zumindest eine elektronische Steuerung des Fahrantriebes auf. Geeignete berührungslose Sensoren können beispielsweise als akustische, elektromagnetische oder optische Sende- und Empfangseinheiten ausgeführt sein. Die für die Steuerelektronik benötigte elektrische Leistung ist weitgehend unabhängig von der übrigen Auslegung und dem Gewicht des Saugreinigungswerkzeuges und trägt nicht unmittelbar zu der nominellen Saugleistung, die durch Sauggebläse und Walzenantrieb bestimmt wird, bei. Erfindungsgemäß ist die selbstfahrende Saugreinigungsvorrichtung deshalb so bemessen, dass auf die Steuerelektronik weniger als 5% der maximal elektrischen Leistung entfallen.

Auch die für den Fahrantrieb aufzubringende elektrische Leistung führt nicht zu einer Verbesserung der Saugleistung des Saugreinigungswerkzeuges, weshalb diese in einer bevorzugten Ausführung der Erfindung weniger als 15% der maximal elektrischen Leistung des Sauggebläses beträgt.

Vorzugsweise ist als Stromquelle eine Akkumulatoreneinheit vorgesehen. Geeignet ist eine Akkumulatoreneinheit mit einer Kapazität von zumindest 100 Wh, mit der die selbstfahrende Saugreinigungsvorrichtung für etwa 30 Minuten zu betreiben ist. Im Rahmen der Erfindung kann eine manuelle Wiederaufladung oder eine automatische Wiederaufladung in einer Ladestation vorgesehen sein, in die das Saugreinigungswerkzeug selbstständig zurückfährt. Möglich ist auch, dass eine entladene Akkumulatoreneinheit manuell oder automatisch, beispielsweise in der Ladestation, gegen eine aufgeladene Akkumulatoreneinheit ausgetauscht wird, wodurch die Betriebsdauer ohne eine lange Unterbrechung verlängert werden kann. In einer alternativen Ausführung der Erfindung ist eine Brennstoffzelle als Stromquelle vorgesehen. Die Brennstoffzelle, die vorzugsweise mit Methanol betrieben wird, kann schnell nachgefüllt werden und weist eine hohe Energiedichte bezogen auf ihr Gewicht auf.

Der Walzenantrieb, dessen maximale elektrische Leistung erfindungsgemäß höchstens 40 Watt bzw. 1/3 der Leistung des Sauggebläses beträgt, treibt gemäß einer bevorzugten Ausführung der Erfindung eine einzige Reinigungswalze an, die in einer von der Saugluft durchströmten Bürstenkammer im Gehäuse angeordnet ist. Bei einer derartigen Anordnung können Krümel, Fusseln und Staub effektiv von glatten Bodenbelägen und von den Fasern textiler Bodenbeläge gelöst und entfernt werden. Als Reinigungswalze ist eine Bürstenwalze oder eine Lamellenwalze mit durchgehenden oder segmentierten weichen Lamellen einsetzbar.

Eine besonders leichte Steuerung von Fahrtrichtung und -geschwindigkeit kann dadurch erreicht werden, dass der Fahrantrieb zwei Antriebsmotoren aufweist, denen jeweils ein Antriebsrad zugeordnet ist, und dass die Lenkung des Saugreinigungswerkzeuges durch die variable Ansteuerung der Antriebsmotoren erfolgt. Durch eine solche Ausführung ist auch eine gute Manövrierfähigkeit gewährleistet.

Zur Optimierung der Saugeigenschaften bei einem möglichst geringen Energieverbrauch des Saugreinigungswerkzeuges ist abhängig von der Beschaffenheit des Bodenbelages und/oder des Verschmutzungsgrades vorzugsweise eine variable Leistungssteuerung des der Reinigungswalze zugeordneten Walzenantriebes und/oder des Sauggebläses und/oder des Fahrantriebes vorgesehen. Durch die Steuerung des Fahrantriebes kann auf textilen Bodenbelägen eine geringere Fahrgeschwindigkeit als auf glatten Böden vorgesehen sein. Durch eine Reduzierung der Fahrgeschwindigkeit ist eine intensivere Reinigung des Bodenbelages möglich. Auf glatten Bodenbelägen sind Schmutzpartikel vergleichsweise leicht zu entfernen, weshalb üblicherweise auch bei einer höheren Fahrgeschwindigkeit eine ausreichende Reinigungswirkung erzielt werden kann. Zusätzlich oder alternativ zu einer Variation der Fahrgeschwindigkeit kann auch eine Drehzahlregulierung des Sauggebläses vorgesehen sein. Um Schmutz aus den Fasern eines textilen Bodenbelages lösen zu können, ist typischerweise ein großer Saugluftstrom und eine entsprechend hohe Drehzahl des Sauggebläses notwendig. Auf glatten Bodenbelägen dagegen, können von der Reinigungswalze gelöste Schmutzpartikel auch bei einer geringeren Saugleistung, also einer geringeren Drehzahl des Sauggebläses, zuverlässig aufgenommen werden.

Zur Optimierung der Saugeigenschaften kann der Fahrantrieb eine Einrichtung zur Höhenverstellung aufweisen, die manuell betätigbar ist oder selbsttätig in Abhängigkeit der Beschaffenheit des Bodenbelages gesteuert wird. Auch eine von der Beschaffenheit des Bodenbelages abhängige Höhenverstellung des Fahrantriebes kann vorgesehen sein. So kann das Saugreinigungswerkzeug auf glatten Bodenbelägen in sehr geringer Höhe über den Bodenbelag geführt werden, wodurch eine effektive Aufnahme von Schmutzpartikeln gewährleistet wird. Auf textilen Bodenbelägen kann es bei einer zu niedrigen Höhe des Saugreinigungswerkzeuges dazu kommen, dass das Saugreinigungswerkzeug auf dem Boden aufliegt und sich durch den Saugluftstrom festsaugt. Eine ausreichende Traktion zwischen Fahrantrieb und textilem Bodenbelag ist dann nicht gewährleistet. Durch eine Höhenverstellung des Fahrantriebes kann der Abstand zwischen Saugreinigungswerkzeug und Bodenbelag variiert werden, wodurch auch auf unterschiedlichen textilen Bodenbelägen wie Teppichboden oder langflorigem Teppich gute Saugleistungen erzielt werden können.

Im Folgenden wird die Erfindung anhand ein lediglich ein Ausführungsbeispiel darstellenden Zeichnung erläutert.

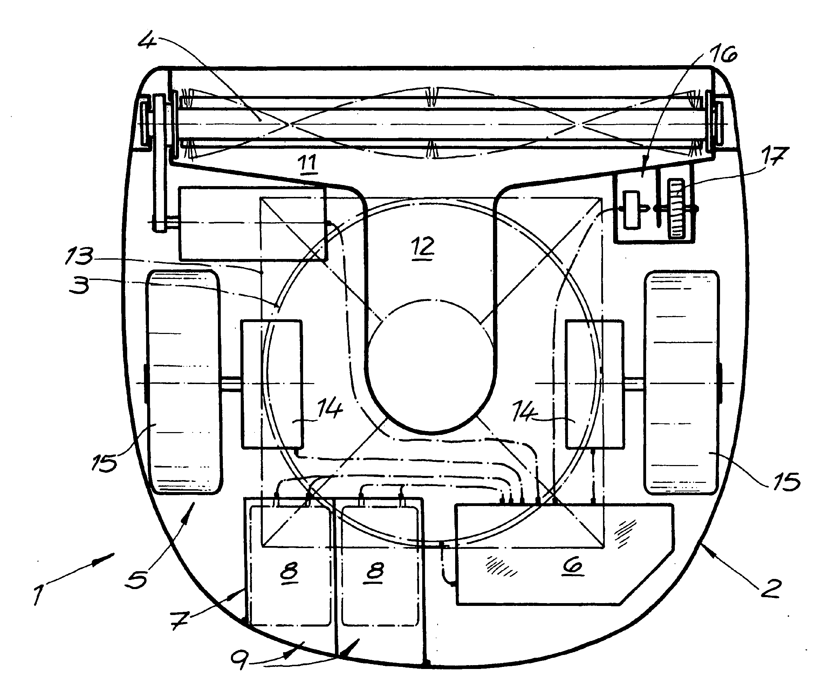

Die einzige Figur zeigt eine schematische Darstellung der Komponenten einer selbst fahrenden Saugreinigungsvorrichtung.

Die einzige Figur zeigt eine selbst fahrende Saugreinigungsvorrichtung für die Reinigung von glatten und textilen Bodenbelägen beispielsweise im privaten Wohnbereich. In einem Gehäuse 2 sind ein Sauggebläse 3, eine elektrisch angetriebene Reinigungswalze 4, ein elektrischer Fahrantrieb 5, eine Steuerelektronik 6 und eine Stromquelle 7 angeordnet. Die maximale elektrische Leistung der selbstfahrenden Saugreinigungsvorrichtung 1 liegt bei 225 Watt, wobei auf das Sauggebläse 3 170 Watt, auf den elektrischen Walzenantrieb für die Reinigungswalze 25 Watt, auf den Fahrantrieb 25 Watt und auf die Steuerelektronik 6 einschließlich der nicht dargestellten Sensoren und Anzeigen 5 Watt entfallen. Als Stromquelle 7 ist eine Akkumulatoreneinheit 8 mit einer Kapazität von 150 Watt vorgesehen. Die Wiederaufladung der Akkumulatoreneinheit erfolgt in einer Ladestation, in die die selbst fahrende Saugreinigungsvorrichtung 1 vor einer vollständigen Entladung der Akkumulatoreneinheit 8 selbstständig zurückkehrt. Mit einer aufgeladenen Akkumulatoreneinheit 8 ist ein Saugbetrieb von mindestens 40 Minuten möglich, wobei für die Rückkehr der Saugreinigungsvorrichtung in die Ladestation Energiereserven verbleiben. In dem Gehäuse 2 sind zwei Einschübe 9 für die Aufnahme einer Akkumulatoreneinheit 8 vorgesehen, so dass auch ein automatischer oder manueller Austausch der Akkumulatoreneinheit 8 auf einfache Weise möglich ist. Alternativ zu einer Akkumulatoreneinheit 8 kann auch eine Brennstoffzelle als Stromquelle 7 vorgesehen sein.

Als Reinigungswalze 4 wird eine Bürstenwalze verwendet, die in einer von der Saugluft durchströmten Kammer 11 im Gehäuse 2 angeordnet ist. Alternativ ist auch eine Lamellenwalze einsetzbar, die mit durchgehenden oder segmentierten weichen Lamellen bestückt ist. An die Kammer 11 schließt ein Luftkanal 12 an, der zu einem Staubauffangbehälter 13 führt, in dem die aufgenommenen Schmutzpartikel in einem Beutel gesammelt werden. An den Staubaufhangbehälter 13 schließt das Sauggebläse 3 an. Der Fahrantrieb weist zwei Antriebsmotoren 14 auf, denen jeweils ein Antriebsrad 15 zugeordnet ist, wobei die Lenkung des Saugreinigungswerkzeug 1 durch die variable Ansteuerung der Antriebsmotoren 14 erfolgt. Zur Bestimmung der Beschaffenheit des Bodenbelages ist an der Unterseite des Saugreinigungswerkzeuges 1 ein Sensor 16 vorgesehen. In der dargestellten Ausführung weist der Sensor 16 ein Kontaktelement 17 z. B. in Form einer Messrolle auf, welches mit einer Feder beaufschlagt ist, wobei die Auslängung der Feder bzw. die Eindringtiefe des Kontaktelementes auf den Bodenbelag elektronisch gemessen und der Steuerelektronik 6 übermittelt wird. Abhängig von der Beschaffenheit des Bodenbelages ist eine Höhenverstellung des Fahrantriebes 5 und eine variable Leistungssteuerung des der Reinigungswalze 4 zugeordneten Walzenantriebes, des Sauggebläses 3 und des Fahrantriebes 5 vorgesehen.

Auf einem kurzflorigen Teppichboden wird die Saugreinigungsvorrichtung in einer mittleren Höhenstellung mit maximaler Fahrgeschwindigkeit und maximaler Drehzahl des Sauggebläses über den Bodenbelag geführt. Bei einem langflorigen Teppich ist die Höhenverstellung des Fahrantriebes 5 so eingestellt, dass der Abstand zwischen Saugreinigungsvorrichtung 1 und Bodenbelag maximal ist. Das Sauggebläse 3 wird bei maximaler Drehzahl betrieben, wobei zu einer Verbesserung der Reinigungswirkung die Fahrgeschwindigkeit reduziert wird. Bei einem glatten Bodenbelag kann dagegen eine ausreichende Reinigungswirkung bei einer maximalen Fahrgeschwindigkeit und mit einer kleineren Drehzahl des Sauggebläses 3 erreicht werden. Durch die Reduzierung der Drehzahl des Sauggebläses 3 wird der Leistungsbedarf der Saugreinigungsvorrichtung 1 geringer, so dass sich die maximal mögliche Betriebszeit verlängert.

## Patentansprüche

1. Selbstfahrende Saugreinigungsvorrichtung (1) für die Reinigung von glatten und textilen Bodenbelägen, insbesondere im privaten Wohnbereich, mit einem Gehäuse (2), einem Sauggebläse (3), einer elektrisch angetriebenen Reinigungswalze (4), einem elektrischen Fahrantrieb (5), einer Steuerelektronik (6) und einer Stromquelle (7), **dadurch gekennzeichnet, dass** die maximale elektrische Leistung der selbstfahrenden Saugreinigungsvorrichtung (1) beim Reinigungsbetrieb zwischen 150 Watt und 300 Watt liegt, wobei auf das Sauggebläse (3) zwischen 120 Watt und 220 Watt, auf den elektrischen Walzenantrieb für die Reinigungswalze (4) zwischen 10 Watt und 40 Watt und auf den Fahrantrieb (5) zwischen 5 Watt und 40 Watt entfallen und wobei die Steuerelektronik einen Leistungsbedarf von weniger als 5 % der maximalen elektrischen Leistung aufweist.

2. Selbstfahrende Saugreinigungsvorrichtung nach Anspruch 1, **dadurch gekennzeichnet, dass** die maximale elektrische Leistung des Fahrantriebes (5) weniger als 15 % der maximalen elektrischen Leistung des Sauggebläses (3) beträgt.

3. Selbstfahrende Saugreinigungsvorrichtung nach Anspruch 1 oder 2, **dadurch gekennzeichnet, dass** die Stromquelle (7) eine Akkumulatoreinheit (8) ist.

4. Selbstfahrende Saugreinigungsvorrichtung nach Anspruch 1 oder 2, **dadurch gekennzeichnet, dass** die Stromquelle (7) eine Brennstoffzelle ist.

5. Selbstfahrende Saugreinigungsvorrichtung nach einem der Ansprüche 1 bis 4, **dadurch gekennzeichnet, dass** die Reinigungswalze (4) als Bürstenwalze oder Lammelenwalze mit durchgehenden oder segmentierten weichen Lamellen ausgebildet ist.

6. Selbstfahrende Saugreinigungsvorrichtung nach einem der Ansprüche 1 bis 5, **dadurch gekennzeichnet, dass** der Fahrantrieb (5) zwei Antriebsmotoren (14) aufweist, denen jeweils eine Antriebsrad (15) zugeordnet ist, und dass die Lenkung des Saugreinigungswerkzeuges (1) durch die variable Ansteuerung der Antriebsmotoren (14) erfolgt.

7. Selbstfahrende Saugreinigungsvorrichtung nach einem der Ansprüche 1 bis 6, **dadurch gekennzeichnet, dass** abhängig von der Beschaffenheit des Bodenbelages und/oder des Verschmutzungsgrades eine variable Leistungssteuerung des der Reinigungswalze (4) zugeordneten Walzenantriebes und/oder des Sauggebläses (3) und/oder des Fahrantriebes (5) vorgesehen ist.

8. Selbstfahrende Saugreinigungsvorrichtung nach Anspruch 7, **dadurch gekennzeichnet, dass** auf textilen Bodenbelägen eine geringere Fahrgeschwindigkeit als auf glatten Bodenbelägen vorgesehen ist.

9. Selbstfahrende Saugreinigungsvorrichtung nach Anspruch 7 oder 8, **dadurch gekennzeichnet, dass** auf glatten Bodenbelägen eine geringere Drehzahl des Sauggebläses (3) als auf textilen Bodenbelägen vorgesehen ist.

10. Selbstfahrende Saugreinigungsvorrichtung nach einem der Ansprüche 1 bis 9, **dadurch gekennzeichnet, dass** der Fahrantrieb (5) eine Einrichtung zur Höhenverstellung aufweist, die manuell betätigbar ist oder selbsttätig in Abhängigkeit der Beschaffenheit des Bodenbelages gesteuert wird.

## Claims

1. Self-propelled vacuum-cleaning device (1) for cleaning smooth and textile floor coverings, in particular in domestic environments, comprising a housing (2), a suction fan (3), an electrically driven cleaning roller (4), an electric drive mechanism (5), control electronics (6) and a power source (7), **characterised in that** the maximum electric power of the self-propelled vacuum-cleaning device (1) is between 150 watts and 300 watts during a cleaning operation, between 120 watts and 220 watts being allocated to the suction fan (3), between 10 watts and 40 watts being allocated to the electric roller drive for the cleaning roller (4) and between 5 watts and 40 watts being allocated to the drive mechanism (5), and the control electronics having a power demand of less than 5% of the maximum electric power.

2. Self-propelled vacuum-cleaning device according to Claim 1, **characterised in that** the maximum electric power of the drive mechanism (5) is less than 15% of the maximum electric power of the suction fan (3).

3. Self-propelled vacuum-cleaning device according to Claim 1 or 2, **characterised in that** the power source (7) is a rechargeable battery unit (8).

4. Self-propelled vacuum-cleaning device according to Claim 1 or 2, **characterised in that** the power source (7) is a fuel cell.

5. Self-propelled vacuum-cleaning device according to one of Claims 1 to 4, **characterised in that** the cleaning roller (4) is configured as a brush roller or a blade roller with continuous or segmented soft blades.

6. Self-propelled vacuum-cleaning device according to one of Claims 1 to 5, **characterised in that** the drive mechanism (5) has two drive motors (14), each of which has a drive wheel (15) associated therewith, and **in that** the steering of the vacuum-cleaning tool (1) takes place by the variable control of the drive motors (14).

7. Self-propelled vacuum-cleaning device according to one of Claims 1 to 6, **characterised in that** a variable power control is provided of the roller drive associated with the cleaning roller (4) and/or of the suction fan (3) and/or of the drive mechanism (5), depending on the nature of the floor covering and/or the degree of soiling.

8. Self-propelled vacuum-cleaning device according to Claim 7, **characterised in that** a lower travelling speed is provided on textile floor coverings than on smooth floor coverings.

9. Self-propelled vacuum-cleaning device according to Claim 7 or 8, **characterised in that** a lower rotational speed of the suction fan (3) is provided on smooth floor coverings than on textile floor coverings.

10. Self-propelled vacuum-cleaning device according to one of Claims 1 to 9, **characterised in that** the drive mechanism (5) has a device for height adjustment, which may be manually actuated or is automatically controlled, depending on the nature of the floor covering.

## Revendications

1. Dispositif automoteur de nettoyage par aspiration (1) pour le nettoyage de revêtements de sol lisses et textiles, notamment dans la sphère d'habitation privée, avec un carter (2), une soufflerie d'extraction (3), un rouleau de nettoyage à entraînement électrique (4), un système d'entraînement électrique (5), une électronique de commande (6) et une source électrique (7), **caractérisé en ce qu'**en mode nettoyage, la puissance électrique maximale du dispositif automoteur de nettoyage par aspiration (1) se situe entre 150 watts et 300 watts, **caractérisé en ce que** de 120 watts à 220 watts s'appliquent sur la soufflerie d'extraction (3), **en ce que** de 10 watts à 40 watts s'appliquent au rouleau de nettoyage (4) et **en ce que** de 5 watts à 40 watts s'appliquent au système d'entraînement (5) et l'électronique de commande présentant une puissance absorbée inférieure à 5 % de la puissance électrique maximale.

2. Dispositif automoteur de nettoyage par aspiration selon la revendication 1, **caractérisé en ce que** la puissance électrique maximale du système d'entraînement (5) est de moins de 15 % de la puissance électrique maximale de la soufflerie d'extraction (3).

3. Dispositif automoteur de nettoyage par aspiration selon la revendication 1 ou 2, **caractérisé en ce que** la source électrique (7) est une unité d'accumulateur (8).

4. Dispositif automoteur de nettoyage par aspiration selon la revendication 1 ou 2, **caractérisé en ce que** la source électrique (7) est une unité de cellule électrochimique (8).

5. Dispositif automoteur de nettoyage par aspiration selon l'une quelconque des revendications 1 à 4, **caractérisé en ce que** le rouleau de nettoyage (4) est réalisé sous la forme d'un rouleau à brosses ou d'un rouleau à lamelles avec des lamelles souples continues ou segmentées.

6. Dispositif automoteur de nettoyage par aspiration selon l'une quelconque des revendications 1 à 5, **caractérisé en ce que** le système d'entraînement (5) comporte deux moteurs d'entraînement (14) à chacun desquels est associée une roue motrice (15) et **en ce que** la commande de l'outil de nettoyage par aspiration (1) s'effectue par l'activation variable des moteurs d'entraînement (14).

7. Dispositif automoteur de nettoyage par aspiration selon l'une quelconque des revendications 1 à 6, **caractérisé en ce qu'**indépendamment de la caractéristique du revêtement de sol et/ou du niveau d'encrassement, il est prévu une commande variable de la puissance de l'entraînement des rouleaux associé au rouleau de nettoyage (4) et/ou de la soufflerie d'extraction (3) et/ou du système d'entraînement (5).

8. Dispositif automoteur de nettoyage par aspiration selon la revendication 7, **caractérisé en ce que** sur les revêtements de sol textiles, il est prévu une vitesse d'entraînement inférieure à celle pour les revêtements de sol lisses.

9. Dispositif automoteur de nettoyage par aspiration selon la revendication 7 ou 8, **caractérisé en ce que** sur des revêtements de sol lisses, il est prévu une vitesse de rotation inférieure de la soufflerie d'extraction (3) à celle pour les revêtements de sol textiles.

10. Dispositif automoteur de nettoyage par aspiration selon l'une quelconque des revendications 1 à 9, **caractérisé en ce que** le système d'entraînement (5) comporte un système de réglage en hauteur à actionnement manuel ou à commande automatique en fonction de la caractéristique du revêtement de sol.
